(19) Europäisches Patentamt
European Patent Office
Office européen des brevets

(11) **EP 1 736 822 A1**

(12) **EUROPEAN PATENT APPLICATION**
published in accordance with Art. 158(3) EPC

(43) Date of publication:
**27.12.2006 Bulletin 2006/52**

(51) Int Cl.:
*G03F 5/22* (2006.01)    *B41C 1/00* (2006.01)
*B41J 2/525* (2006.01)    *H04N 1/52* (2006.01)
*H04N 1/60* (2006.01)

(21) Application number: **05720766.4**

(22) Date of filing: **15.03.2005**

(86) International application number:
**PCT/JP2005/004509**

(87) International publication number:
**WO 2005/101120 (27.10.2005 Gazette 2005/43)**

(84) Designated Contracting States:
**DE GB**

(30) Priority: **12.04.2004 JP 2004116979**

(71) Applicant: **PFU LIMITED**
**Kahoku-shi,**
**Ishikawa 929-1192 (JP)**

(72) Inventor: **KISHIMOTO, Yasuhiko**
**c/o PFU TECHNOCONSUL Limited**
**Ishikawa 9291192 (JP)**

(74) Representative: **Reichel, Wolfgang**
**Reichel und Reichel Patentanwälte,**
**Parkstrasse 13**
**60322 Frankfurt am Main (DE)**

(54) **MULTICOLOR HALFTONE PLATE AND METHOD FOR PRODUCING THE SAME**

(57)    A multicolor halftone image apparatus of the present invention includes halftone plates of a plurality of colors for reproducing a colored image, and each halftone is tilted with a relative screen angular difference of 30 degrees or 45 degrees in relation to at least one of the remaining halftones. For the preparation of the multicolor halftone, on the basis of a predetermined screen angle of a specific halftone, halftone dots are disposed in the specific halftone at a predetermined pitch. For each of the remaining halftones, a right triangle is defined such that its vertical angle is equal to a screen angel difference of 30 degrees or 45 degrees which the halftone has in relation to another halftone, and its two sides forming the vertical angle corresponds to screen angle directions of the two halftones.

The ratio of the three sides of the right triangle represented by numerical values including $\sqrt{3}$ or $\sqrt{2}$, which is an irrational number, is represented by integral values which approximate values obtained by multiplying the numerical values by an integer. On the basis of the right triangle having a ratio approximated by the integral values, respective halftone dots of the two halftones are disposed at a pitch equal to the predetermined pitch along the screen angle directions of the two halftones corresponding to the two sides forming the vertical angle.

FIG. 1

**Description**

TECHNICAL FIELD

The present invention relates to a multicolor halftone image apparatus including a plurality of halftone plates for reproducing a colored image in accordance with the rational tangent method and to a method of forming multicolor halftone images. In particular, the present invention relates to a method of suppressing generation of moiré.

BACKGROUND ART

In a halftone-dot image output apparatus, a binary or multivalued halftone-dot image data is generated through comparison between continuous-tone image data obtained from an original image and halftone-dot threshold data. For each of yellow (Y), magenta (M), cyan (C), and black (K), a halftone-dot image is recorded on a recording medium such as a printing paper or film through control of a laser beam or the like in accordance with the halftone-dot threshold data. A colored halftone-dot image is produced by the superimposed halftone-dot images of Y, M, C, and K.

When the halftone-dot images of Y, M, C, and K are superimposed, generation of a moiré stripe attributable to the cycle of dot cells must be prevented. A number of technologies that suppress generation of such a moiré stripe is known (refer to, for example, Patent Document 1 and Patent Document 2).

FIG. 28 is a diagram showing a typical dot cell as disclosed in Patent Document 2. This drawing shows the relation between one dot cell configured by a plurality of halftone-dot threshold data and pixels formed by a laser beam or the like in a main scanning direction (the direction of arrow x) and a sub-scanning direction (the direction of arrow y) of the recording medium. In this case, the halftone-dot threshold data is set for each pixel in the dot cell. When an image is formed through superimposition of a plurality of halftone-dot images, moiré stripes in a halftone-dot image can be reduced by setting each dot cell at a predetermined tilt angle θ (screen angle θ) in relation to the main scanning direction (the direction of arrow x) or the sub-scanning direction (the direction of arrow y). The number of gray levels of the halftone-dot image is determined by the number of pixels configuring each dot cell. In addition, the output resolution (dpi) of the halftone-dot image output apparatus is defined by the number of pixels per inch, and the number of screen lines (dot cell cycle)(lpi) is defined by the number of dot cells per inch. In the halftone-dot image output apparatus, a binarized image data (binary image data) is generated through magnitude comparison between the continuous-tone image data and the halftone-dot threshold data set for each pixel of the dot cell. Recording is performed for each pixel by manes of, for example, the laser beam based on the generated binary image data.

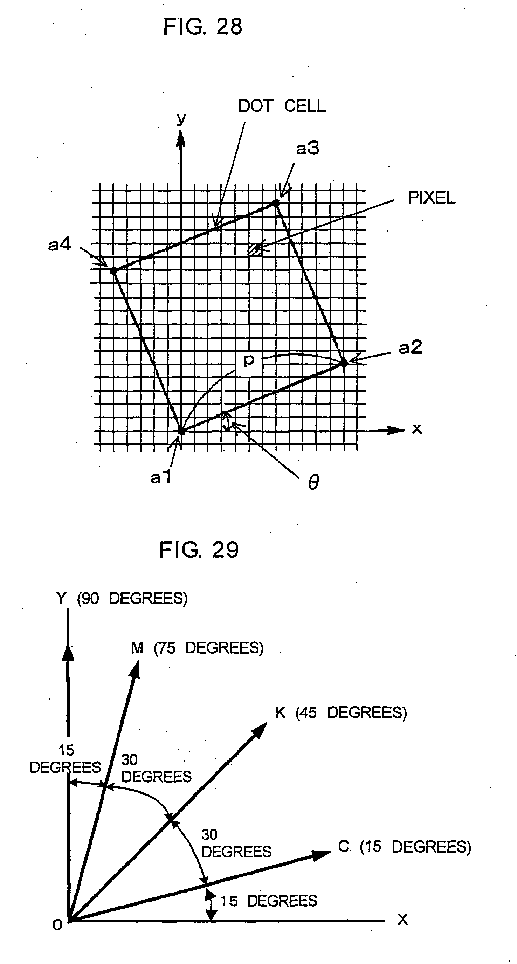

A color printed matter is generally produced by overprinting four color-separated halftone plates of yellow (Y), magenta (M), cyan (C), and black (K) in respective color inks. In this case, generation of moiré is prevented by equalizing the pitches of halftone dots (each corresponding to the dot cell in FIG. 28) in the four halftone plates and making their screen angles (the direction of rows of halftone dots) different from one another.

Generation of moiré is related deeply to cyan (C), magenta (M), and black (K), which are dark colors, among the four colors. On the other hand, yellow (Y), which is a light color, is of poor visibility, and is relatively less influential on generation of moiré. In addition, there was found that the effect of suppressing generation of moiré appears most significantly when printing is performed with the angular difference between three halftone plates of magenta (M), black (K), and cyan (C) being maintained at 30 degrees, and the angular difference of the halftone of yellow (Y) in relation to that of magenta (M) or black (K) being maintained at 15 degrees.

FIG. 29 is a diagram showing the screen angles of the four color-separated halftone plates of yellow (Y), magenta (M), cyan (C), and black (K), each screen angle expressing the gradient of rows of halftone dots in the corresponding halftone plate. Moiré can be minimized when a color printed matter is produced by overprinting, in respective color inks, the four halftone plates of yellow (Y), magenta (M), black (K), and cyan (C) which are identical in the number of lines (the number of rows of halftone dots arranged per inch) (hereinafter referred to as a "line number") and which are tilted at 90 degrees, 75 degrees, 45 degrees, and 15 degrees, respectively, as shown in FIG. 29.

When color-separated halftone plates are photographically prepared by use of a process camera, those of desired angles can be easily obtained by a method of photographing a single contact screen while rotating it to the desired angle for each color-separated halftone, or a method of photographing four contact screens fabricated to have the respective desired angles.

However, when color-separated halftone plates of an image captured line by line by use of a color scanner are deployed by use of a computer, the coordinates of halftone dots constituting each color-separated halftone have to be digitally calculated and defined. In recent years, since the demand for plate making techniques using computers have been rapidly increased, a method of producing halftone plates by making use of the rational tangent method has been widely employed. Patent Document 1 and Patent Document 2 specially describe methods of making plates by making use of the rational tangent method.

A conventional method of generating a color halftone-dot image using a computerized halftone-dot image output apparatus will be explained with reference to FIG. 29. As shown in FIG. 29, the screen angle of a cyan (C) halftone is 15 degrees which is formed between a corresponding line extending from the origin O of the rectangular coordinates and the X-axis. Similarly, the screen angle of a black (K) halftone is 45 degrees in relation to the X-axis, and the screen angle of a magenta (M) halftone is 75 degrees in relation to the X-axis. Here, the black (K) halftone extending in a direction which forms an angle of 45 degrees in relation to the X-axis is taken as an example. When the X coordinate value (x) of a point on a line corresponding to the screen angle is defined by a rational number, the corresponding Y coordinate value (y) always assumes a rational number (y=x·tan 45 degrees=x), because the tangent of 45 degrees (tan 45 degrees) is 1 and is a rational number.

Meanwhile, in the case of the magenta (M) halftone extending in a direction which forms an angle of 75 degrees in relation to the X-axis, even when the X coordinate value (x) of a point on a line corresponding to the screen angle is defined by a rational number, the corresponding Y coordinate value (y) cannot assume a rational number (y=x·tan 75), because the tangent of 75 degrees (tan 75 degrees) is a an irrational number.

Similarly, in the case of the cyan (C) halftone extending in a direction which forms an angle of 15 degrees in relation to the X-axis, even when the X coordinate value (x) of a point on a line corresponding to the screen angle is defined by a rational number, like the above-mentioned case (screen angle: 75 degrees), the corresponding Y coordinate value (y) cannot assume a rational number (y=x·tan 15), because the tangent of 15 degrees (tan 15 degrees) is a an irrational number.

Thus, an irrational number (for example, a square root value) is included in any of the coordinate values of the halftone dots defined in each of the halftone plates whose screen angles are mutually shifted by 30 degrees. Therefore, in a halftone plate forming system in which calculation is performed digitally, since the grids of each halftone are represented by digital values, the screen line number and angle of each halftone cannot be arbitrarily determined unless the coordinate values of the halftone plates are replaced with proper approximated values.

From the foregoing, the following are understood; i.e., when a color halftone-dot image is prepared by use of a computerized halftone-dot image output apparatus on the basis of the irrational tangent method employing the above-described screen angles, for the magenta (M) halftone tilted at an angle of 75 degrees in relation to the X-axis and the cyan (C) halftone tilted at an angle of 15 degrees in relation to the X-axis, some operation is required to juxtapose cells of the respective halftone plates. In addition, as stated above, in the case of the halftone plates having the screen angles of 75 and 15 degrees, respectively, in relation to the X-axis, except for the origin (initial start point), no coordinate point is shared between the halftone dots of the respective colors, and there is no means for knowing the relative positional relation therebetween.

In connection with a method of digitally calculating and defining a screen having a specific tilt angle, the following two methods have been developed. In one method, called a rational tangent method, irrational numbers contained in the coordinate values of halftone dots are approximated by corresponding rational numbers and are replaced with the rational numbers, and the halftone dots are formed in the unit of a tilted matrix. Since this rational tangent method handles simplified rational numbers, the processing speed is high. In addition, since the shape of individual halftone dots are secured, generation of moiré by a single halftone is less likely to occur. However, a method of correcting deviations in a wide area does not exist, and adjusting the angles and line numbers to the desired values is difficult.

In the other method, called an irrational tangent method, the angles and line numbers are correctly adjusted to the desired values with the irrational numbers appearing in the coordinate values of halftone dots being maintained, calculation is performed by using the irrational numbers as they are, and the obtained final values are approximated. In this irrational tangent method, since the irrational numbers are handled as they are, the processing speed is low. Although the adjustment of the angles and line numbers is easy, the regularity is low and the halftone dots become likely to have different shapes, because the positions of the individual halftone dots are set by use of respective approximated values. When the coordinate values represented by irrational numbers are replaced with approximated coordinate values, which are rational numbers, a non-continuity in halftone-dot arrangement becomes more likely to be produced between the juxtaposed dot cells. Additional adjustment becomes necessary to eliminate the non-continuity.

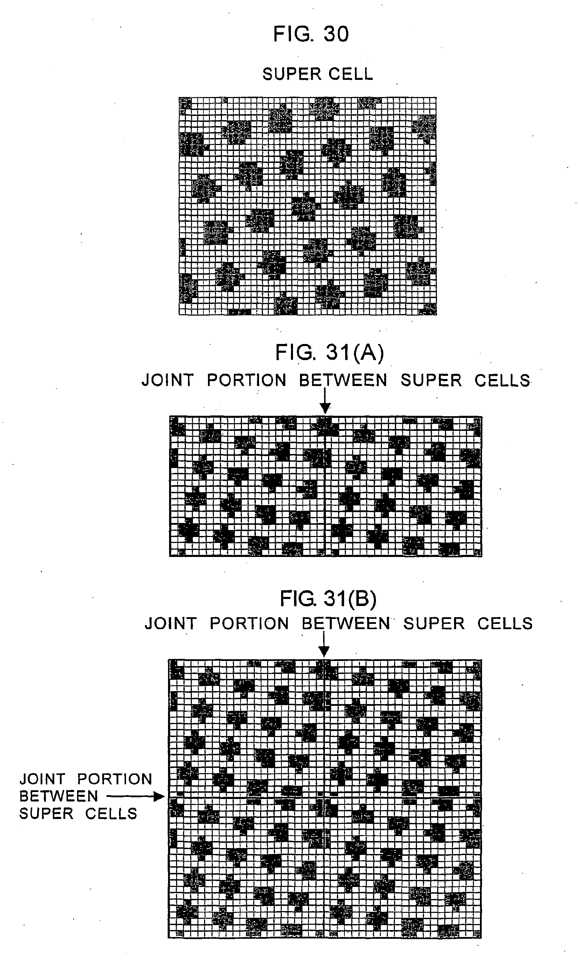

FIG. 30 is a diagram showing a super cell. In addition, FIG. 31(A) and FIG. 31(B) are diagrams showing recurrence of super cells. FIG. 31(A) shows the combination of two super cells and FIG. 31(B) that of the four super cells, respectively. As the size of a cell increases, the angle and line number become closer to ideal values even when the halftone-dot angle is represented by an irrational number. Then, using a huge matrix, irrational tangent halftone-dots are created in it, and the matrix is cut off in square. The resultant square is a super cell. Even a supper cell of large matrix is produced, it can be handled by a computer, if the size is within the capacity of the memory.

At present, this method is a mainstream. However, this method has a problem in that when the cut-off super cells are located adjacent to each other, in some cases, they do not match each other, as shown in FIG. 31. Since irrational numbers are employed, super cells adjacent to each other never exactly match even when the size of super cells is increased.

In order to constitute super cells in which matrices of a certain size repeatedly appear and a Rosetta pattern as in printing is formed, four halftones; e.g., the first, magenta (M) halftone, the second, black (K) halftone, the third, cyan (C) halftone, and the fourth, yellow (Y) halftone must have the same line number and predetermined angle differences therebetween, and the four halftones must regularly intersect at the same point.

Therefore, practically, the configuration of color-separated halftone plates which are low in visibility of moiré and which can be achieved by combining various conditions such as a method of adopting approximated values, screen line numbers, and screen angles, is prepared in advance, is stored in a memory region, and is retrieved and applied as necessary. When this method is employed, the configuration of color-separated halftone plates which are low in visibility of moiré can be obtained without fail; however, this method merely selects halftone plates having configurations similar to those of halftone plates completely matching with the respective printing conditions, and, needless to say, its degree of freedom depends on the number of samples which are stored in the memory region and are provided.

Patent Document 1: Japanese Patent Application Laid-Open Publication No. 6-130656
Patent Document 2: Japanese Patent Application Laid-Open Publication No. 2002-369017

DISCLOSURE OF THE INVENTION

PROBLEMS TO BE SOLVED BY THE INVENTION

As stated above, color-separated halftone plates prepared to perform color printing in the four colors of yellow (Y), cyan (C), magenta (M), and black (K) generally has the same halftone-dot pitch. Therefore, in order to suppress the generation of moiré at the time of printing, the screen angles for these colors have to be set to predetermined tilt angles.

The present invention is applicable to a computerized color-separated halftone preparation in which, in order to digitally calculate the positions of individual halftone dots each having a specific screen angle, the coordinate values of the halftone dot positions containing irrational numbers are replaced with approximated values which are rational numbers. An object of the present invention is to facilitate the configuration of color-separated halftone plates which are guaranteed in terms of the continuity of halftone-dot arrangement between juxtaposed cells.

MEANS FOR SOLVING THE PROBLEMS

A multicolor halftone image apparatus according to the present invention includes halftone plates of a plurality of colors for reproducing a colored image, and each halftone is tilted with a relative screen angular difference of 30 degrees or 45 degrees in relation to at least one of the remaining halftone plates. The multicolor halftone plates includes one specific halftone plate and the remaining halftone plates. In the specific halftone plate, halftone dots are disposed at a predetermined pitch on the basis of a predetermined screen angle. For each of the remaining halftones, a right triangle is defined such that its vertical angle is equal to a screen angel difference of 30 degrees or 45 degrees which the halftone has in relation to another halftone, and its two sides forming the vertical angle corresponds to screen angle directions of the two halftones. On the basis of the right triangle, respective halftone dots of the two halftone plates are disposed at a pitch equal to the predetermined pitch along the screen angle directions of the two halftone plates corresponding to the two sides forming the vertical angle. The halftone dots are disposed on the basis of the ratio of the three sides of the right triangle represented by numerical values including $\sqrt{3}$ or $\sqrt{2}$, which is an irrational number, the numerical values being approximated by integral values which approximate values obtained by multiplying the numerical values by an integral value.

The present invention also provides a method of forming multicolor halftone images including halftone plates of a plurality of colors for reproducing a colored image, wherein each halftone is tilted with a relative screen angular difference of 30 degrees or 45 degrees in relation to at least one of the remaining halftone plates. In the method, on the basis of a predetermined screen angle of a specific halftone, halftone dots are disposed in the specific halftone plate at a predetermined pitch. For each of the remaining halftone plates, a right triangle is defined such that its vertical angle is equal to a screen angel difference of 30 degrees or 45 degrees which the halftone has in relation to another halftone, and its two sides forming the vertical angle corresponds to screen angle directions of the two halftone plates. The ratio of the three sides of the right triangle represented by numerical values including $\sqrt{3}$ or $\sqrt{2}$, which is an irrational number, is represented by integral values which approximate values obtained by multiplying the numerical values by an integer. On the basis of the right triangle having a ratio approximated by integral values, respective halftone dots of the two halftone plates are disposed at a pitch equal to the predetermined pitch along the screen angle directions of the two halftone plates corresponding to the two sides forming the vertical angle.

EFFECTS OF THE INVENTION

According to the present invention, color-separated halftone plates which are guaranteed in terms of the continuity of the halftone-dot arrangement between juxtaposed cells can be easily configured even through the coordinate values of the halftone-dot positions including irrational numbers are replaced with approximated values which are rational numbers.

According to the present invention, it is possible to form halftone dots having angles and line numbers such that when halftone-dot matrices are formed over the entire region, the matrices intersect at an overlap point of the four halftone plates without fail, irrespective of the size of the halftone-dot matrices.

According to the present invention, although the screen angles of the individual halftone plates are approximated to predetermined angles, the coordinate values of all the halftone-dot positions can be represented by rational numbers by eliminating, from the coordinate values of the individual halftone dots, elements represented by irrational numbers. By virtue of this, it becomes possible to provide a halftone image forming method most suitable to multicolor halftone images generated by a computer.

BRIEF DESCRIPTION OF THE DRAWINGS

FIG. 1 is a diagram showing a first example of screen angles of four halftones; i.e., a first, magenta (M) halftone, a second, black (K) halftone, a third, cyan (C) halftone, and a fourth, yellow(Y) halftone.

FIG. 2 is a diagram showing a second example of screen angles of four halftones; i.e., a first, magenta (M) halftone, a second, black (K) halftone, a third, cyan (C) halftone, and a fourth, yellow(Y) halftone.

FIG. 3 is a diagram showing screen angles corresponding to the screen angles shown in FIG. 1 for the case where an angle $\theta 2$ of the second halftone is less than 45 degrees.

FIG. 4 is a diagram showing screen angles corresponding to the screen angles shown in FIG. 2 for the case where the angle $\theta 2$ of the second halftone is larger than 45 degrees.

FIG. 5 is a diagram for generally explaining a method of forming a multicolor halftone images according to the present invention.

FIG. 6 is a diagram for explaining the relation between the first, magenta (M) halftone and the second, black (K) halftone.

FIG. 7 is a diagram showing a table in which values obtained by multiplying $3^{1/2}$ by integer (n) are listed.

FIG. 8 is a diagram for explaining the configuration of cells intersecting at positions of AO:AB:BO=7:4: 8, which is a ratio determined using a multiple value of "four times."

FIG. 9 is a diagram showing the definitions of m1 and n1.

FIG. 10 is a diagram for explaining the arrangement of halftone dots of the first halftone and the second halftone.

FIG. 11 is a diagram for explaining the third halftone which has an angular difference of 30 degrees in relation to the second halftone.

FIG. 12 is a diagram for explaining the pitch in the first halftone.

FIG. 13 is a diagram for explaining the pitch in the second halftone.

FIG. 14 is a diagram for explaining the pitch in the third halftone.

FIG. 15 is a diagram for explaining the ratio of the sides of a 15-degree right triangle.

FIG. 16 is a diagram for explaining the ratio of the sides of a 45-degree right isosceles triangle.

FIG. 17 is a diagram showing a table in which values obtained by multiplying $2^{1/2}$ by integer (m) are listed.

FIG. 18 is a diagram for explaining a halftone-dot alignment of the fourth halftone.

FIG. 19 is a diagram for explaining another example of the halftone dot alignment of the fourth halftone.

FIG. 20 is a diagram for explaining the fact that the fourth halftone forming halftone dots at the pitch of the second halftone also inevitably overlaps the point where the three halftones overlap.

FIG. 21 is a diagram showing another example of preparation of halftone dots of the fourth halftone (yellow halftone) with which moiré is hardly produced.

FIG. 22 is a diagram for explaining the example of FIG. 21 in more detail.

FIG. 23 is a diagram for explaining in detail explaining another example different from that of FIG. 22.

FIG. 24 is a diagram for explaining the halftone-dot arrangement of the example shown in FIGS. 21 and 22.

FIG. 25 is a diagram for explaining the preparation of halftone dots based on the example shown in FIGS. 21 and 22.

FIG. 26 is a diagram showing an example of screen angles which differ from the screen angles of the halftones shown in FIG. 1 or 2.

FIG. 27 is a diagram for explaining a method of preparing the halftone dots of the fourth halftone based on the screen angles shown in FIG. 26.

FIG. 28 is a diagram showing a typical dot cell as disclosed in Patent Document 2.

FIG. 29 is a diagram showing the screen angles indicating the gradients of rows of halftone dots of four color-separated halftone plates of yellow (Y), magenta (M), cyan (C), and black (K).

FIG. 30 is a diagram for explaining a super cell.

FIG. 31 is a diagram for explaining the recurrence of super cells.

FIG. 32 is a diagram for describing super cells to be joined with a screen angle used as a reference.

BEST MODE FOR CARRYING OUT THE INVENTION

As is known, cells in which matrices of a certain size repeatedly appear and a Rosetta pattern as observed in offset printing is formed, are formed in the following manner. Four halftones; e.g., the first, magenta (M) halftone, the second, black (K) halftone, the third, cyan (C) halftone, and the fourth, yellow (Y) halftone are prepared to have the same line number and predetermined angle differences therebetween (that is, an angular difference of 30 degrees is present between the magenta (M) halftone and the black (K) halftone and between the black (K) halftone and the cyan (C) halftone, and the yellow (Y) halftone has an angular difference of 15 degrees in relation to the magenta (M) halftone or the black (K) halftone); and the four halftones periodically intersect at the same point.

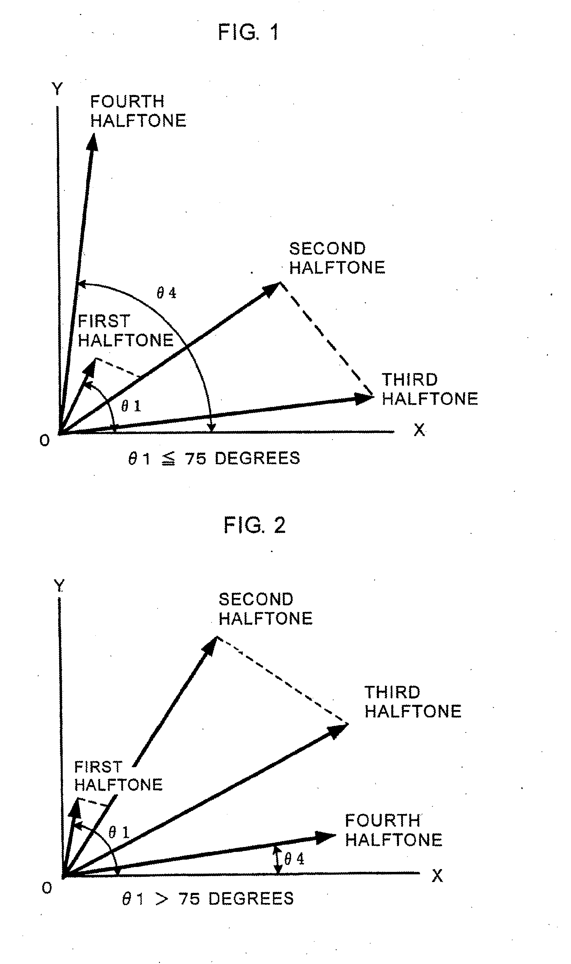

FIG. 1 and FIG. 2 are diagrams showing first and second examples, respectively, of the screen angles of the four halftones; i.e., the first, magenta (M) halftone, the second, black (K) halftone, the third, cyan (C) halftone, and the fourth yellow (Y) halftone. In the present invention, the screen angular difference between the first halftone and the second halftone and that between the second halftone and the third halftone are maintained at 30 degrees. The fourth halftone (yellow halftone) is preferably prepared to maintain an angular difference of 15 degrees in relation to the first halftone or the third halftone. Therefore, in FIG. 1 showing the case where the angle θ1 of the first halftone is less than 75 degrees, the fourth halftone maintains the angle of 15 degrees in relation to the first halftone. In this case, the angle θ4 of the fourth halftone is made larger than 75 degrees. On the other hand, in FIG. 2 showing the case where the angle θ1 of the first halftone is larger than 75 degrees, the fourth halftone maintains the angle of 15 degrees in relation to the third halftone. In this case, the angle θ4 of the fourth halftone is set to 15 degrees or less.

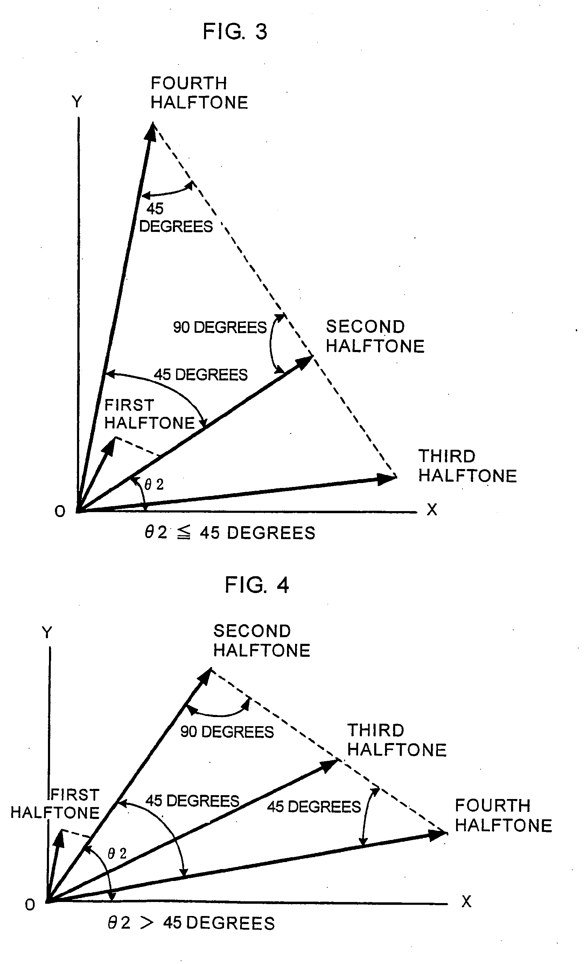

As stated above, the fourth halftone (yellow halftone) maintains the angular difference of 15 degrees in relation to the first halftone or the third halftone. In the present invention, utilizing the fact that the angular difference between the first halftone and the third halftone is maintained at 30 degrees for separation therebetween, as shown in FIGS. 3 and 4, the angle of the fourth halftone (yellow halftone) is defined to be 45 degrees (= 30 degrees + 15 degrees) in relation to the second halftone, rather than the first halftone or the third halftone. By virtue of this, a 45-degree right isosceles triangle as shown in FIGS. 3 and 4 is formed by the screen angle lines of the second halftone and the fourth halftone. The example shown in FIG. 3 is the case where the angle θ2 of the second halftone is less than 45 degrees and which corresponds to the case of FIG. 1. The example shown in FIG. 4 is the case where the angle θ2 of the second halftone is larger than 45 degrees and which corresponds to the case of FIG. 2.

In order to form a 45-degree right isosceles triangle between the second halftone and the fourth halftone, the fourth halftone (yellow halftone) is prepared to have an angle of 75 degrees or more when the angle θ2 of the second halftone is less than 45 degrees as shown in FIG. 3. On the other hand, the fourth halftone (yellow halftone) is prepared to have an angle of 15 degrees or less when the angle θ2 of the second halftone is larger than 45 degrees as shown in FIG. 4.

In the present invention, the angle between lines representing the respective screen angle directions of the second, black (K) halftone and the first, magenta (M) halftone (hereinafter, the angle may be called "vertical angle") is maintained at 30 degrees; similarly, the vertical angle between the third, cyan (C) halftone and the second, black (K) halftone is maintained at 30 degrees. The vertical angle between the fourth, yellow (Y) halftone and the second, black (K) halftone is maintained at 45 degrees. As described above, in the present invention, the screen angles of the four halftones are set in such a manner that the vertical angle between each halftone and at least one of the remaining halftones is maintained at either 30 degrees or 45 degrees. Therefore, the four halftones can be set to have arbitrary angles in relation to the coordinate axes (X-axis, Y-axis) as a whole, while maintaining the relative relation thereamong.

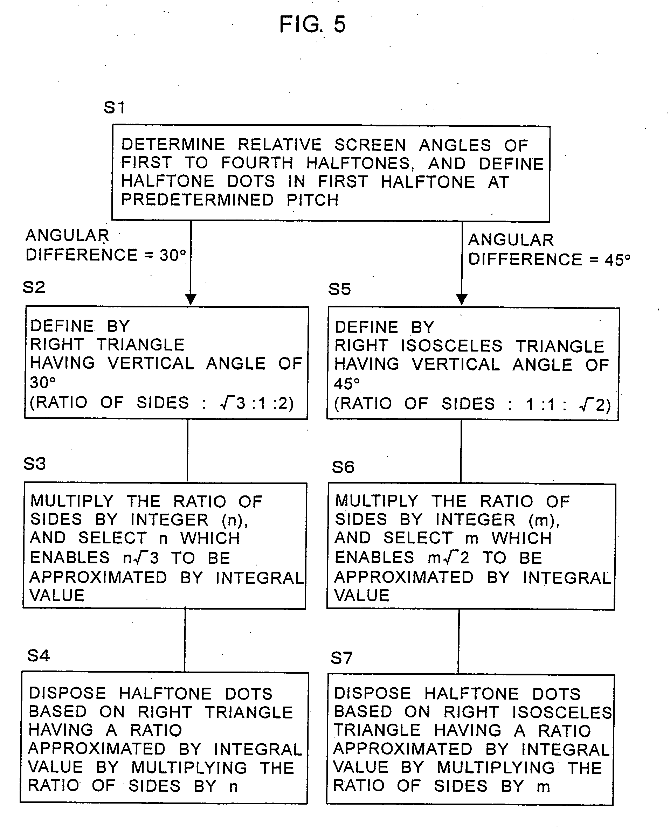

FIG. 5 is a diagram for generally describing a method of preparing a multicolor halftone according to the present invention.

Step S1: Relative screen angles of the first to fourth color halftones to be formed are determined. The screen angles are set to have the conventionally known relation having being described with reference to FIGS. 1 to 4. Namely, the angular difference between the first halftone and the second halftone and that between the second halftone and the third halftone are maintained at 30 degrees. Then, the angular difference of the fourth halftone (yellow halftone) in relation to the second halftone is set to 45 degrees. It has been known that moiré becomes the minimum when the respective color halftones are prepared with the above-mentioned predetermined angular differences being maintained.

First, halftone dots of a predetermined pitch defined by a rational number are defined in the first halftone having a predetermined screen angle. Notably, in this example, the first halftone is of magenta (M); however, the present invention is not limited thereto, and the first halftone may be of another color.

Step S2, as stated above, the angular difference between the first halftone and the second halftone and that between the second halftone and the third halftone are 30 degrees. In the case where the screen angular difference between two halftones is 30 degrees as described above, there is defined a right triangle whose two sides correspond to the respective screen angular directions and whose an angle (vertical triangle) therebetween is 30 degrees. The ratio of the sides of this right triangle is ($\sqrt{3}$:1:2).

Step S3: an integral value (n) is selected such that when the ratio of the sides is multiplied by n, n·$\sqrt{3}$ can be approximated by an integral value. This allows the ratio of the right triangle to be approximated by an integral value.

Step S4: on the basis of the right triangle having a ratio appropriated by an integral value, the halftone dots of the second halftone are disposed with the first halftone used as a reference, and the halftone dots of the third halftone are disposed with the second halftone used as a reference. Namely, the halftone dots of two halftones are disposed at the same pitch such that the screen angular directions of the two halftones coincide with the directions of the segments forming the vertical angle of the right triangle.

Step S5: As stated above, the angular difference of the fourth halftone in relation to the second halftone is 45 degrees. In the case where the screen angular difference between two halftones is 45 degrees as described above, there is defined a right isosceles triangle whose two sides correspond to the respective screen angular directions and whose an angle (vertical triangle) therebetween is 45 degrees. The ratio of the sides of this right isosceles triangle is $(1:1:\sqrt{2})$.

Step S6: an integral value (m) is selected such that when the ratio of the sides is multiplied by m, $m \cdot \sqrt{2}$ can be approximated by an integral value. This allows the ratio of the right isosceles triangle to be approximated by an integral value.

Step S7: on the basis of the right isosceles triangle having a ratio appropriated by an integral value, the halftone dots of the fourth halftone are disposed with the second halftone used as a reference. Namely, the halftone dots of two halftones are disposed at the same pitch such that the screen angular directions of the two halftones coincide with the directions of the segments forming the vertical angle of the right isosceles triangle.

(Case where the angle between two halftones is 30 degrees)

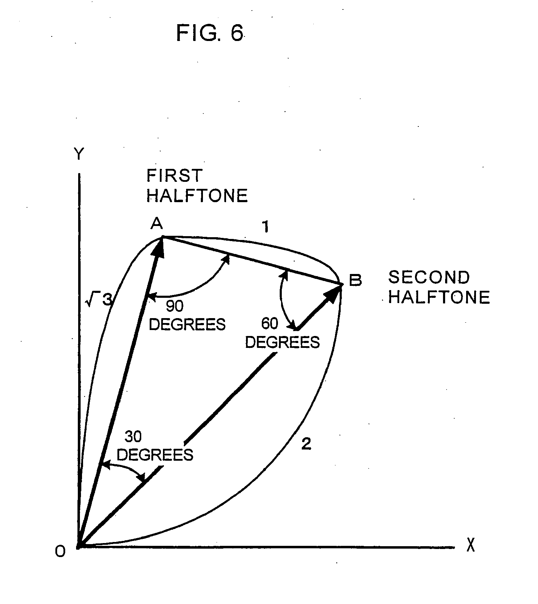

The preparation of the halftones generally explained above will be further explained in detail. First, the relation between the magenta (M) halftone, which is the first halftone, and the black (K) halftone, which is the second halftone, is considered. The first halftone is deployed along the line segment OA, and the second halftone is deployed along the line segment OB, as shown in FIG. 6. An angular shift of 30 degrees is present between the first halftone and the second halftone, and their halftone dots are present in a lattice pattern. Namely, the first halftone has halftone dots along the line segment AO and further has halftone dots on line segments perpendicularly intersecting the line segment AO. The second halftone is the same as in the first halftone.

It is known that the ratio of the sides of the illustrated triangle AOB is AO:AB:BO=$\sqrt{3}$:1:2. Therefore, when the angle AOB is accurately set to 30 degrees, theoretically, the first halftone and the second halftone cannot constitute cells intersecting at the same point, except for the origin O. In the present invention, the triangle AOB is slightly distorted to a degree within which no practical problem occurs, to thereby enable the first halftone and the second halftone to constitute cells which regularly intersect at the same point.

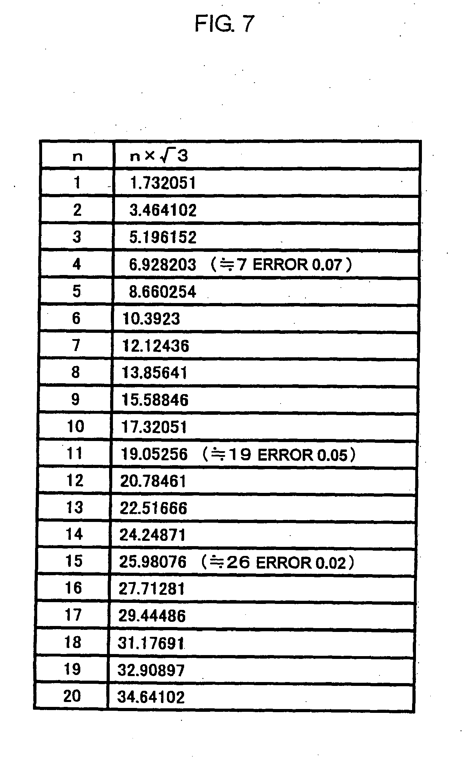

FIG. 7 shows a table in which values obtained by multiplying $3^{1/2}$ by integer (n) are listed. Here, the square root of 3 is expressed by "$3^{1/2}$." Naturally, this $3^{1/2}$ ($\cong 1.732051$) is an irrational number. FIG. 7 shows that, of integral multiples (one time to twenty times) of $3^{1/2}$, the values of "four times", "eleven time", and "fifteen times" assume values close to corresponding integers. In the case of "four times" value, $3^{1/2} \times 4 \cong 3.928203$. If

this value is rounded to 7, an error becomes about 0.07. In addition, in the case of "eleven times", $3^{1/2} \times 11 \cong 19.05256$. If this value is rounded to 19, an error becomes about 0.05. Further, in the case of "fifteen times" value, $3^{1/2} \times 15 \cong 25.98076$. If it is rounded to 26, an error becomes about 0.02.

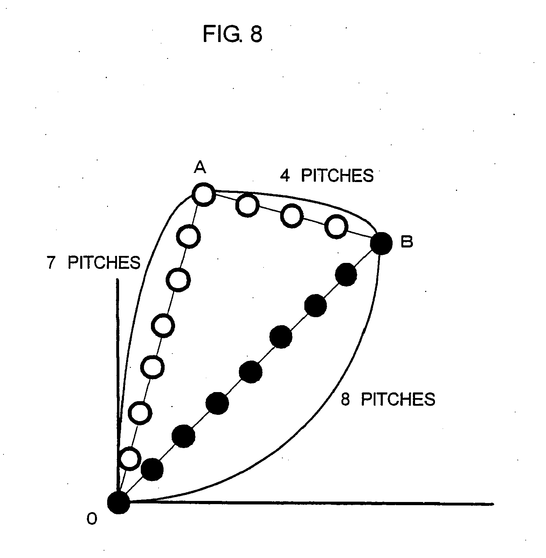

The smaller the error, the better the result obtained. However, as an example for explanation, it is considered the case where cells are configured such that they intersect at positions of AO:AB:BO=7:4:8, which is the ratio determined by making use of the multiple value of "four times," as shown in FIG. 8. This triangle having the ratio (7:4:8) approximates the right triangle shown in FIG. 6 whose AO:AB:BO ratio is $\sqrt{3}$:1:2, and the angle between the line segments OA and OB is approximately 30 degrees.

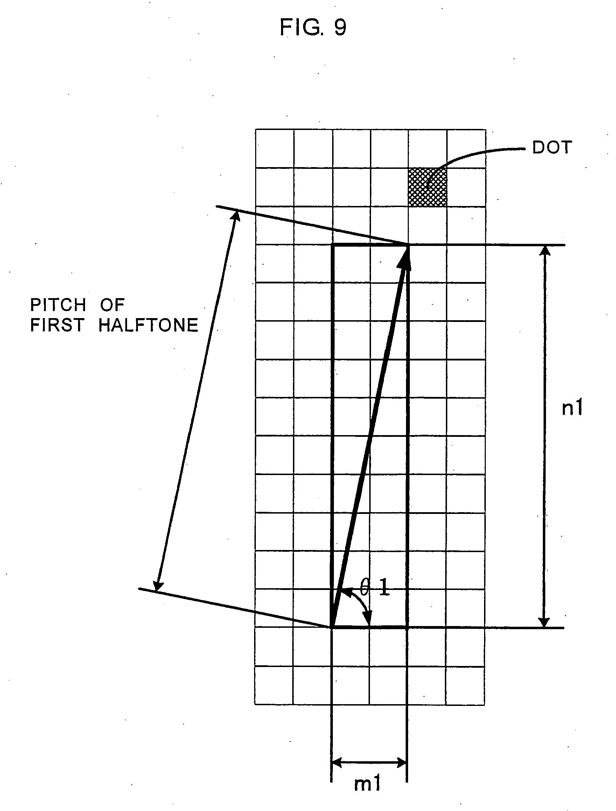

As shown in FIG. 9, $\cos\theta 1$ and $\sin\theta 1$ of the pitch of the first halftone are represented by m1, n1, where n1 > m1, $\theta 1$ > 60 degrees, and m1 and n1 are rational numbers. Although FIG. 9 shows the definitions of m1 and n1, m2 to m4 and n2 to n4 used in the following description are defined in the same manner.

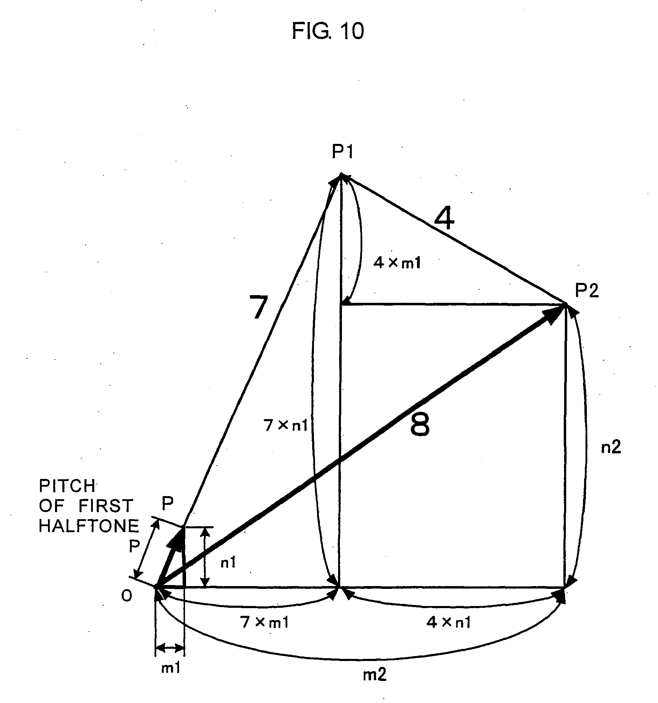

Next, a method of disposing the halftone dots of the first halftone and the second halftone on the basis of the triangle approximated by the ratio of (7:4:8) as described above will be explained with reference to FIG. 10. In order to constitute rational tangent matrixes in the first halftone and the second halftone, a point P determined by a single pitch in the first halftone is first defined (the length of line segment OP: p). The coordinates of the point P are represented by (m1, n1), where the values of m1 and n1 are rational numbers.

Next, the second halftone is defined, while the first halftone defined as above is used as a reference. Namely, point p1 is defined on an extension of the line segment OP, and its coordinates are represented by $(7 \times m1, 7 \times n1)$. Therefore, halftone dots of the first halftone are located on the line segment OP1, and a halftone dot of the first halftone is also present at the point P1. In addition, the coordinate values $(7 \times m1, 7 \times n1)$ are both rational numbers.

A vertical line is drawn from the point P1, and a point P2 is defined on the vertical line. Here, in accordance with the initial conditions, the ratio between the line segment OP1 and the line segment P1P2 is set to 7:4 (namely, line segment OP1=7p, line segment P1P2=4p).

The second halftone is defined along the line segment OP2. The coordinates (m2, n2) of the point P2 are represented by the following formulas.

$$m2 = 7 \times m1 + 4 \times n1$$

$$n2 = 7 \times n1 - 4 \times m1$$

In addition, since m1 and n1 are rational numbers, the coordinate values m2 and n2 are both rational numbers.

The length of the line segment OP2 is calculated. The square value of the length of the line segment OP2 is equal to the sum of the square value of m2 and the square value of n2. From this relation, the formula $OP2 = p \times \sqrt{65}$ is obtained. Here, "$\sqrt{65}$" represents the "square root of 65." The value of $\sqrt{65}$ is approximately 8.062. When the line segment OP2 is divided into 8 subsegments so as to form dots, it is found that the dot pitch in the second halftone is 1.007 times (1.007p) the dot pitch p of the first halftone.

Namely, if 8×8 halftone dots are formed as the second halftone in a rational tangent matrix (cell) whose sides have a size corresponding to the length of OP2 (m2, n2), the second halftone has an angular difference of about 30 degrees in relation to the first halftone, and the two halftones inevitably overlap at the point (m2, n2).

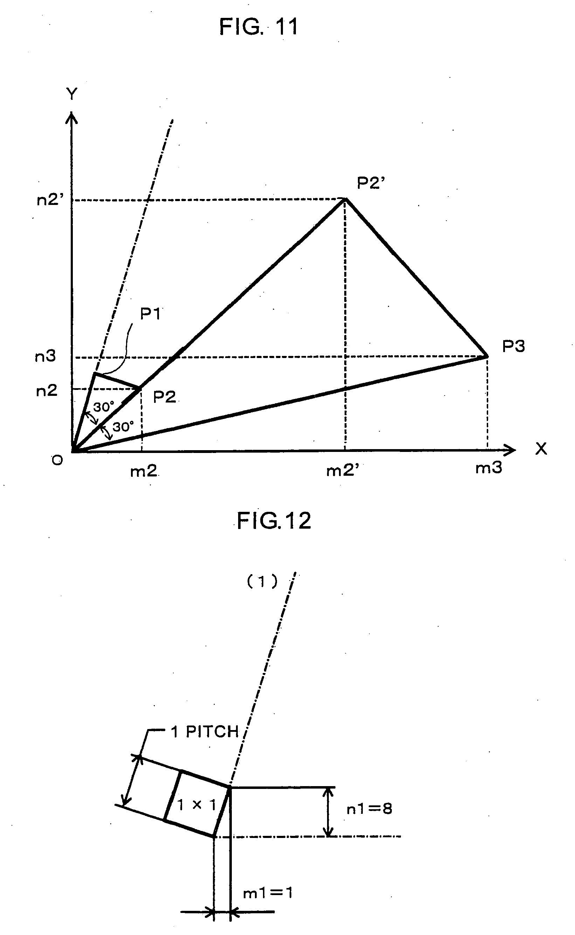

Next, with reference to FIG. 11, there will be described a method of preparing the third halftone having an angular difference of 30 degrees in relation to the second halftone, while the second halftone having an angular difference of about 30 degrees in relation to the first halftone is used as a reference. As in the above-described example, the angular difference between the two halftones is 30 degrees, which can be set in the same manner as in the above-described example.

A point P2' is defined on the extension of the line segment OP2, and its coordinates are represented by (m2', n2'), where m2'=7×m2, n2'=7×n2. Therefore, halftone dots of the second halftone are present on the line segment OP2', and a halftone dot of the second halftone is also present on the point P2'. In addition, the coordinate values m2' and n2' are each a rational number. A vertical line is drawn from the point P2', and a point P3 is defined on the vertical line. Here, in accordance with the initial conditions, the ratio between line segment OP2' and line segment P2'P3 is set to 7:4 (namely, line segment OP2' $\cong$ 56p, line segment P2'P3 $\cong$ 32p) .

The third halftone is defined along the line segment OP3. The coordinate values (m3, n3) of the point P3 are expressed by the following formulas.

$$m3 = 7 \times m2 + 4 \times n2$$

$$n3 = 7 \times n2 - 4 \times m2$$

In addition, since m2 and n2 are rational numbers, the coordinate values m3 and n3 are both rational numbers.

The length of the line segment OP3 is calculated. The square value of the length of the line segment OP3 is equal to the sum of the square of m3 and the square value of n3. From this relation, the formula $OP3 = p \times \sqrt{65} \times \sqrt{65} = p \times 65$ is obtained. When the line segment OP3 is divided into 65 subsegments and dots are formed, it is found that the dot pitch in the third halftone becomes equal to the dot pitch p of the first halftone.

Namely, if 65×65 halftone dots are formed as the third halftone in a rational tangent matrix (cell) whose sides have a size corresponding to the length of OP3 (m3, n3), the third halftone has an angular difference of about 30 degrees in relation to the second halftone, and the two halftones inevitably overlap at the point (m3, n3).

Since the value obtained through division, by an integral value, of a length defined by a rational number is a rational number, all the coordinate values representing the halftone dots defined by the first, second, and third halftones are rational numbers.

Calculation is performed for the case of an actual printing apparatus. For example, when the printing apparatus has a resolution of 1200 dpi, corresponding to 150 lines, as shown in FIG. 12, m1 is se to 1 and n1 is set to 8 in the first halftone, whereby the pitch p becomes 8.06225.

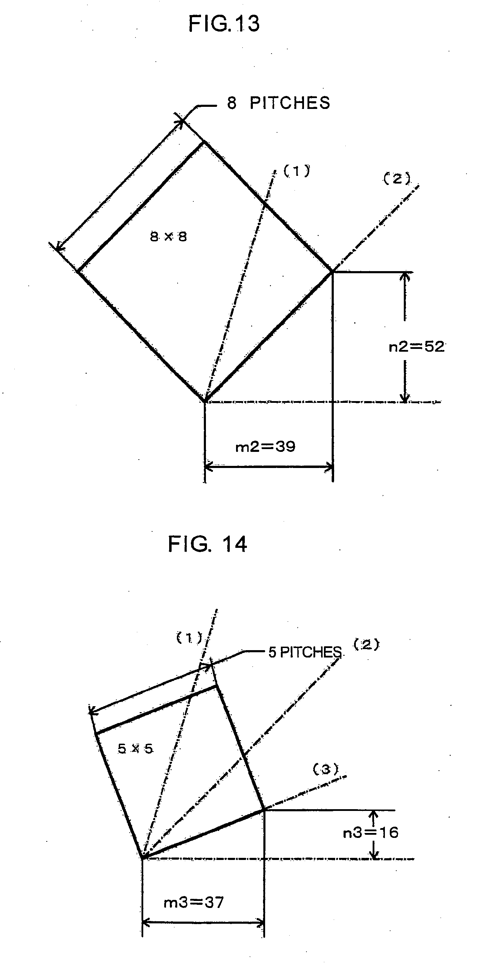

As shown in FIG. 13, in the second halftone,

$$m2 = 7 \times 1 + 4 \times 8 = 39,$$

$$n2 = 7 \times 8 - 4 \times 1 = 52.$$

Halftone dots are formed such that 8x8 dots are formed in the rational tangent.

As shown in FIG. 14, in the third halftone,

$$m3 = 7 \times 39 + 4 \times 52 = 481,$$

$$n3 = 7 \times 52 - 4 \times 39 = 208.$$

Halftone dots are formed such that 65x65 dots are formed in the rational tangent. However, since the numerical values 481, 208, and 65 have "13" as a common divisor, the above formulas can be simplified as follows:

$$m3 = 7 \times 39 + 4 \times 52 / 13 = 37,$$

$$n3 = 7 \times 52 - 4 \times 39 / 13 = 16.$$

Halftone dots are formed such that 5x5 (65/13=5) dots are formed in the rational tangent. With this, the dot pitches of the first halftone to the third halftone become the same.

The above-described algorithm enables creation of halftone dots such that the first, magenta (M) halftone, the second, black (K) halftone, and the third, cyan (C) halftone match with one another in terms of pitch, angle, and repeating period.

In the above, with reference to FIG. 7, there has been described an example in which the four times of √3 is approximated by 7; the screen angle formed by the first and second halftones and the screen angle formed by the second and third halftones are defined by a right triangle; and the two sides forming the vertical angle of the right triangle have a length ratio of 7:8. However, in another possible example, the eleventh times of √3 is approximated by 19, and the two sides forming the vertical angle have a length ratio of 19:22. In still another possible example, the fifteenth times of √3 is approximated by 26, and the two sides forming the vertical angle have a length ratio of 26:30.

(Case where the angle between two halftones is 45 degrees)

Next, the disposition of halftone dots in the forth halftone (yellow halftone) is considered. As stated above, the angular difference between the magenta halftone and the black halftone and that between the black halftone and the cyan halftone should be set to 30 degrees. However, it is desirable that the yellow halftone (fourth halftone) is prepared while the angular difference of 15 degrees is maintained in relation to the first halftone or the third halftone. Further, it is desirable that the yellow halftone (fourth halftone) intersects a single point where the magenta, black, and cyan halftones are guaranteed to intersect.

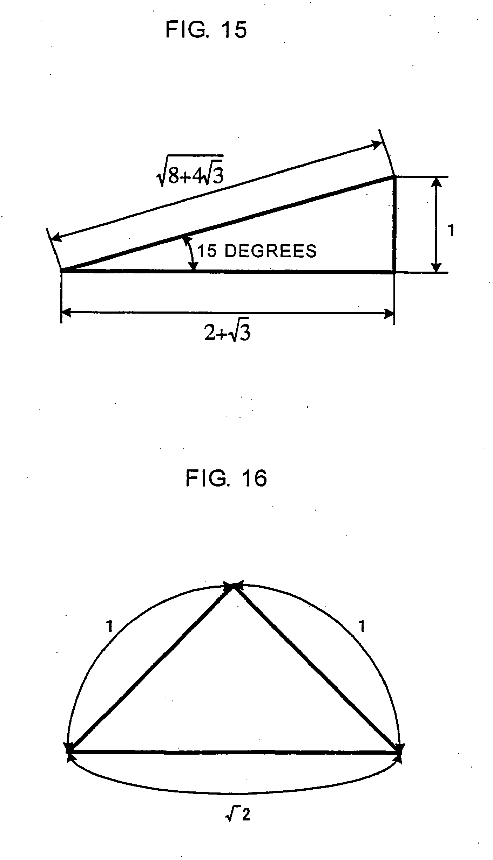

Here, considering the ratio of the sides of a 15-degree right triangle as shown in FIG. 15, the ratio is $(8+4\times3^{1/2})^{1/2} : (2+3^{1/2}) :1$. It is difficult to approximate the triangle by use of rational numbers because the two sides are irrational numbers.

Utilizing the fact that the angular difference between the first halftone and the second halftone and that between the second halftone and the third halftone are maintained at 30 degrees for separation as shown in FIGS. 3 and 4, in the present invention, the angle of the second halftone is set to 45 degrees in relation to the second halftone, rather than being set to 15 degrees in relation to the first halftone or the third halftone.

In order to form a 45-degree right isosceles triangle, the fourth halftone (yellow halftone) is prepared to have an angle of 75 degrees or more when the angle θ2 of the second halftone is less than 45 degrees as shown in FIG. 3. Meanwhile, the fourth halftone (yellow halftone) is prepared to have an angle of 15 degrees or less when the angle θ2 of the second halftone is greater than 45 degrees as shown in FIG. 4.

Since the ratio of the sides of the 45-degree right isosceles triangle is $1:1:2^{1/2}$ as shown in FIG. 16, the closer the value of $2^{1/2}$ to an corresponding integral value, the smaller the difference in line number between the fourth halftone and other halftones.

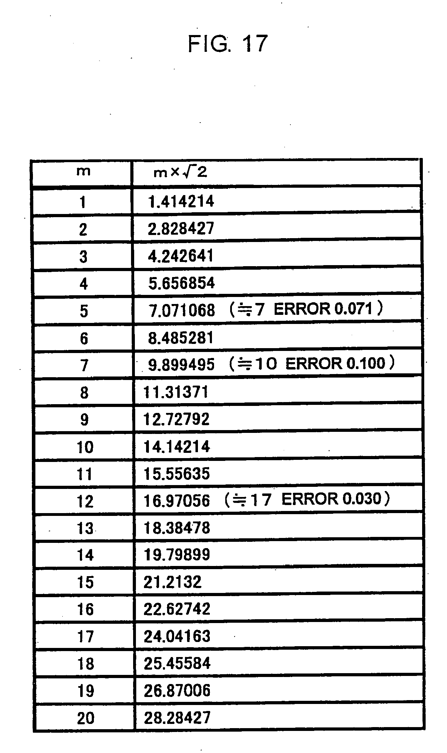

FIG. 17 shows a table in which values obtained by multiplying $2^{1/2}$ by integer (m) are listed. Here, the square root of 2 is expressed in "$2^{1/2}$." This $2^{1/2}$ ($\cong$ 1.414214) is naturally an irrational number. As can be seen from FIG. 17, in the case of "five times" value, $2^{1/2}\times5 \cong 7.71068$. If this value is rounded to 7, an error becomes about 0.071.

In addition, in the case of "seven times" value, $2^{1/2}\times7 \cong 9.899495$. If this value is rounded to 10, an error becomes about 0.100.

In addition, in the case of "twelve times" value, $2^{1/2}\times12 \cong 16.97056$. If this value is rounded to 17, an error becomes about 0.030.

Namely, only a small error is produced even if the sides of the 45-degree right isosceles triangle have one of the ratios listed below:

5: 5: 7 (error 0.071)

7: 7: 10 (error 0.100)

12:12:17 (error 0.030).

Next, the halftone-dot arrangement of the fourth halftone (yellow halftone) is determined on the basis of the right isosceles triangle thus approximated. As described above, the angle of the fourth halftone, which forms halftone dots at 45 degrees in relation to the second halftone, is determined on the basis of whether the angle of the second halftone is larger than 45 degrees or not.

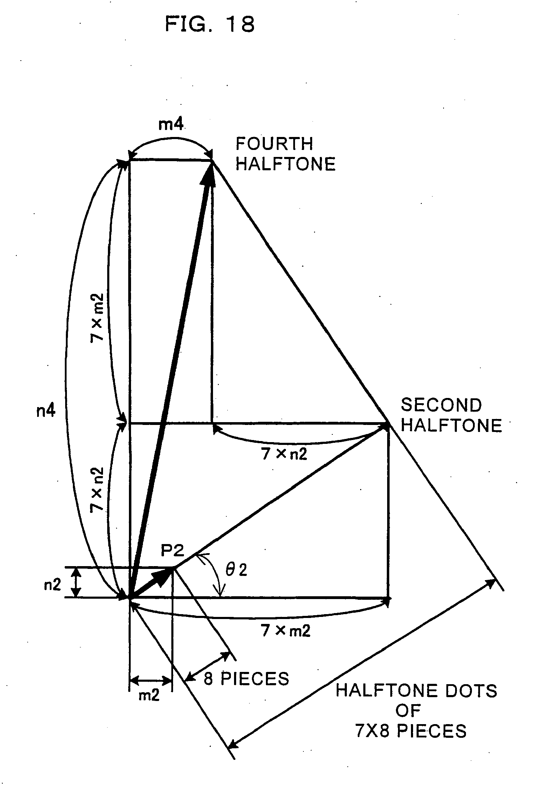

FIG. 18 is a diagram for explaining the halftone-dot arrangement of the fourth halftone. Cosθ2 and sinθ2 of the pitch of the second halftone are represented by m2 and n2, and cosθ4 and sinθ4 of the pitch of the fourth halftone are represented by m4 and n4. When m2 ≥ n2 (when the angle of the second halftone is smaller than 45 degrees) as shown in FIG. 18, the values of m4 and n4 are obtained as follows:

$$m4 = 7 \times m2 - 7 \times n2$$

$$n4 = 7 \times n2 + 7 \times m2.$$

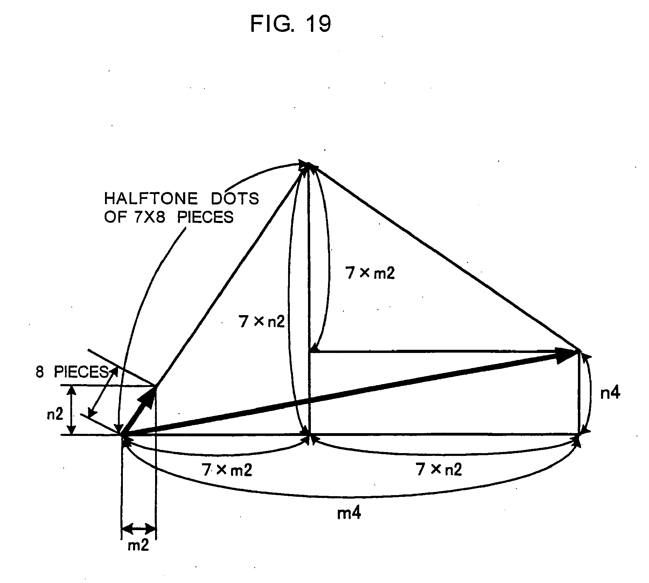

When m2 < n2 (when the angle of the second halftone is larger than 45 degrees) as shown in FIG. 19, the values of m4 and n4 are obtained as follows

$$m4 = 7 \times m2 + 7 \times n2$$

$$n4 = 7 \times n2 - 7 \times m2.$$

In this case, since the number of halftone dots of the second halftone is $7\times8$ times that of the first halftone as shown in FIG. 18 and FIG. 19, it is found from the ratio of 7:7:1 of the 45-degree right isosceles triangle, the fourth halftone is required to produce 80 halftone dots.

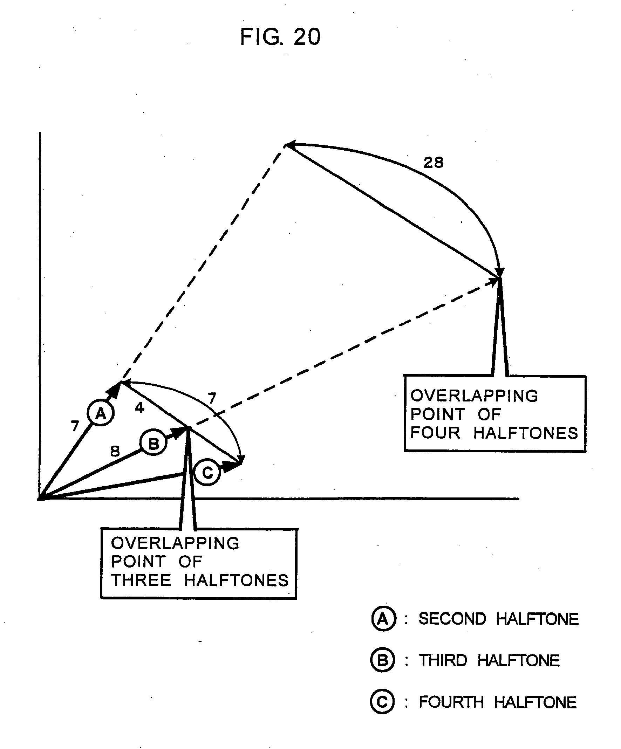

In this method, since the halftone dots are formed at the pitch of the second halftone as shown in FIG. 20, the fourth halftone inevitable overlaps the point where the three halftones overlap. In actuality, the overlap point of the three halftones is a common multiple of 4 and 7. Therefore, the overlap point of the four halftones is very far.

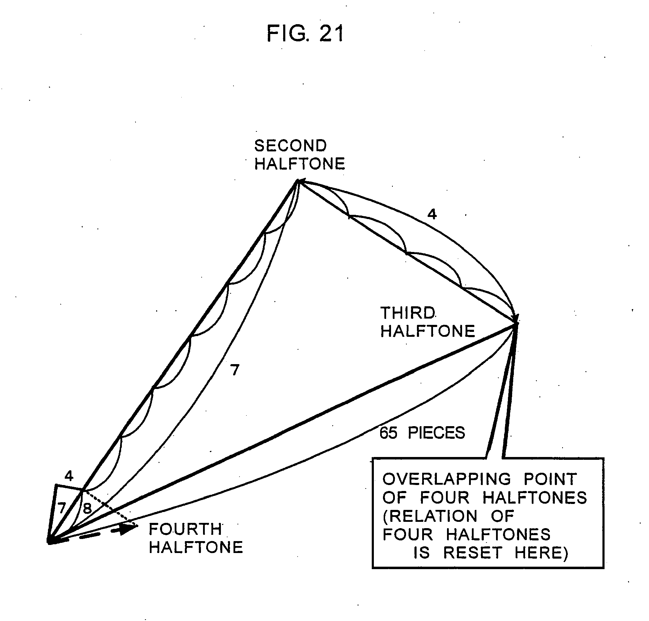

Since the fourth halftone (yellow halftone) hardly produces moiré and very high accuracy is not required for its line number and angle, an angle of 45 degrees may be formed by means of the minimum unit of the second halftone. Namely, halftone dots are prepared to have an angle and number of lines such that, as shown in FIG. 21, when halftone-dot matrices are formed over the entire region, the fourth halftone always intersects the overlap point of the three halftones, irrespective of the size of the halftone-dot matrices.

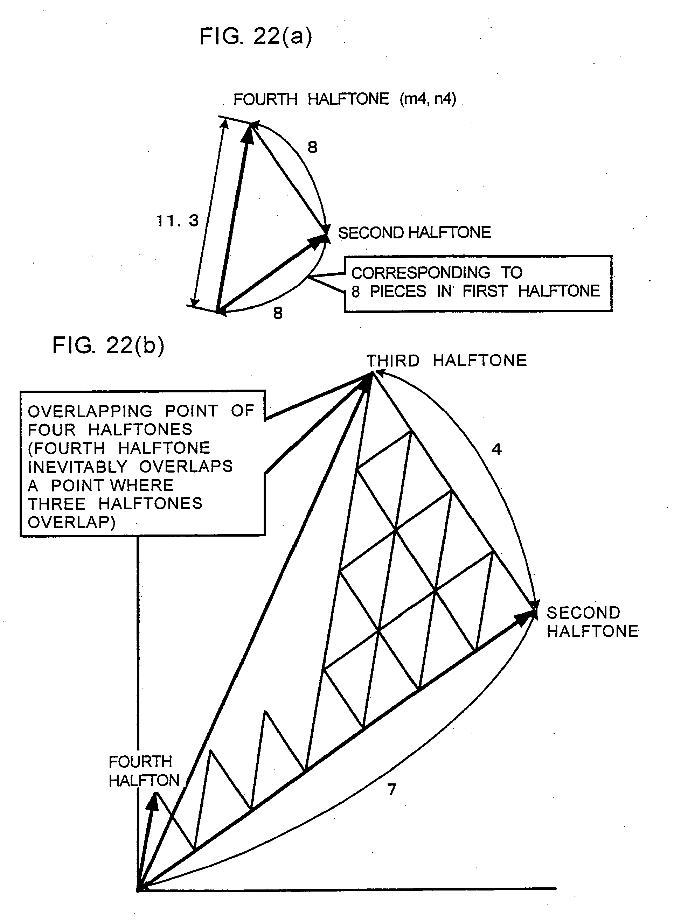

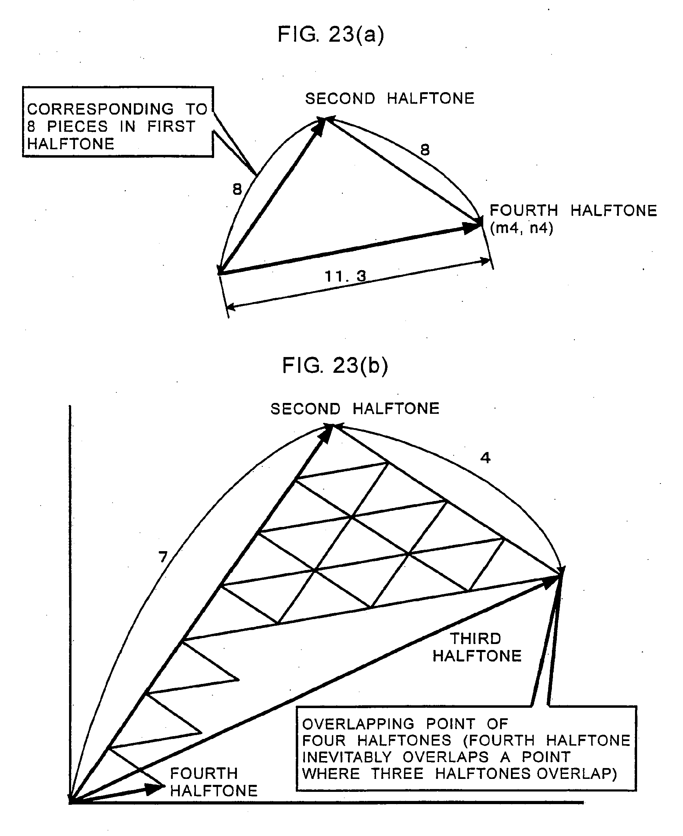

In this case, since the second halftone includes halftone dots, the number of which is 8 times that of the first halftone, as shown in FIGS. 22(a) and 23(a), the pitch of the second halftone corresponds to 8 dots of the first halftone. Therefore, the pitch of the fourth halftone is determined to correspond to 11.3 dots of the first halftone, from the ratio of the sides of the 45-degree right isosceles triangle (8:8:11.3). This value 11.3 is rounded to an integral value of 11 or 12. Although an error produced by the rounding is large, no problem arises because the yellow halftone hardly produces moiré. With this, as shown in FIGS. 22 (b) and 23 (b), the fourth halftone overlaps the remaining halftones without fail at positions where the remaining three halftones overlap.

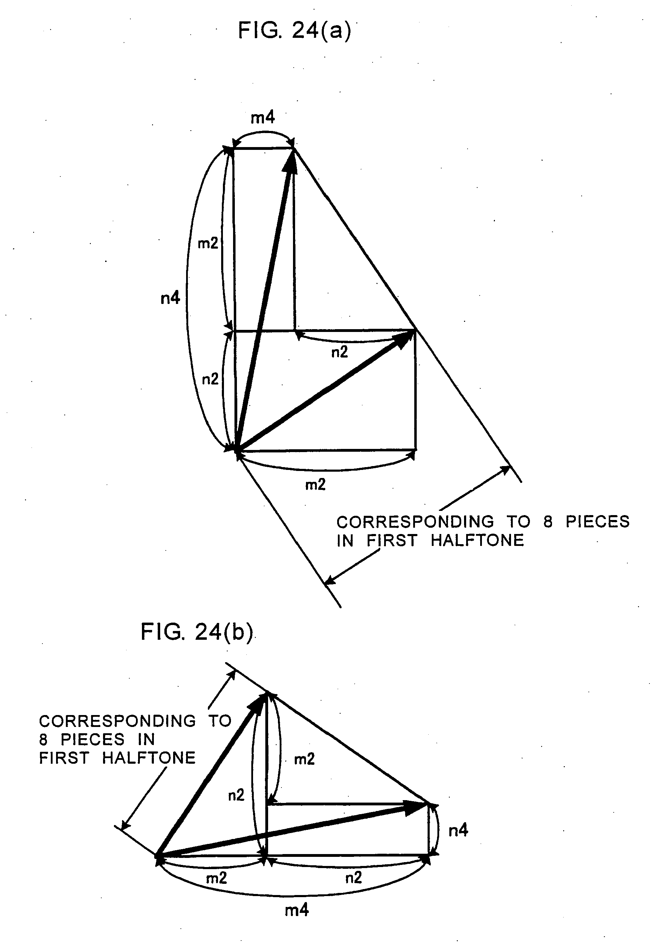

When $\cos\theta4$ and $\sin\theta4$ of the pitch of the fourth halftone (yellow halftone) are represented by m4 and n4, the values of m4 and n4 can be obtained as follows. When $m2 \geq n2$ (when the angle of the second halftone is smaller than 45 degrees) as shown in FIG. 24(a), the values of m4 and n4 are obtained as follows:

$$\texttt{m4=m2-n2}$$

$$\texttt{n4=n2+m2.}$$

When $m2 < n2$ (the angle of the second halftone is larger than 45 degrees) as shown FIG. 24 (b), the values of m4 and n4 are obtained as follows:

$$\texttt{m4=m2+n2}$$

$$\texttt{m4=n2-m2.}$$

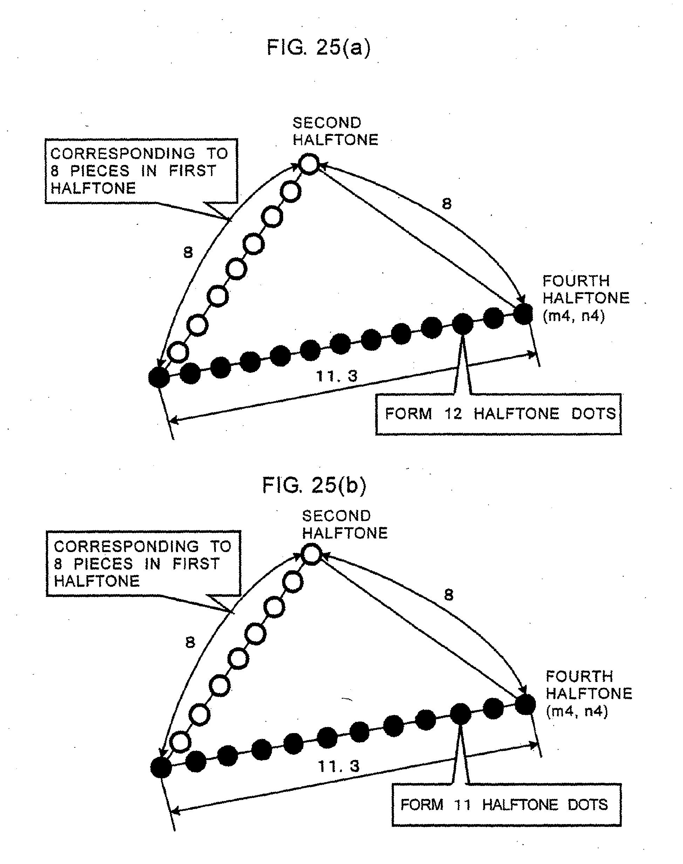

As shown in FIG. 25(a), twelve halftone dots are formed at the pitch of the fourth halftone. In this case, the line number becomes 1.06 times (12/11.3=1.06). Actually, the screen line number slightly greater than the line number of the yellow halftone may be used at a site of printing. This allows halftone dots to be formed in such a manner that the fourth halftone overlaps the point where the three halftones overlap.

In addition, eleven halftone dots may be formed at the pitch of the fourth halftone as shown FIG. 25(b). In this case, the line number becomes 0.97 times (11/11.3=0.97). When the line number of the fourth halftone is increased or decreased so as to enable the fourth halftone to overlap the third halftone at a minimum distance as stated above, the repeating unit, in which the fourth halftone intersect at the point where other three halftones intersect, and thus recurrence is guaranteed, can be made smaller, whereby processing speed can be increased, and the consumption of memory can be reduced.

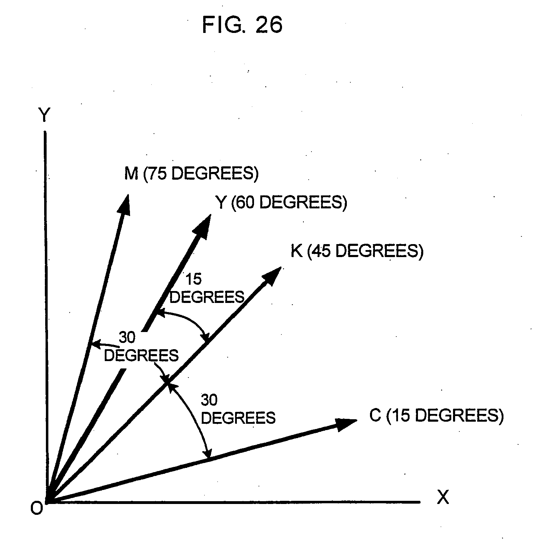

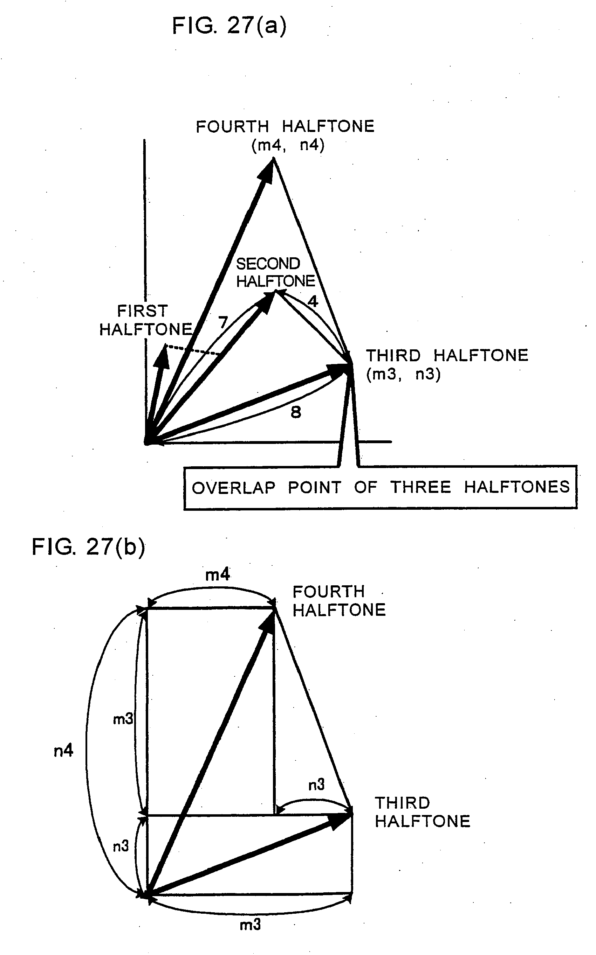

Another embodiment of the present invention will be explained with reference to FIGS. 26 and 27. FIG. 26 is a diagram showing an example of screen angles different from those of the respective halftones shown in FIG. 1 or FIG. 2. In the illustrated example, the fourth halftone (yellow halftone) may be positioned between the magenta halftone (the first halftone) and the black halftone (the second halftone) which have an angle difference of 30 degrees therebetween and which are separated from each other, as practiced in actual printing. In this case, a halftone-dot matrix is formed along a line which forms an angle of 45 degrees in relation to the third halftone (cyan halftone) as shown in FIG. 27(a), whereby halftone dots can be formed such that the fourth halftone overlaps the point where the three halftones overlap.

Here, $\cos\theta3$, $\sin\theta3$ of the pitch of the third halftone are represented by m3 and n3, and $\cos\theta4$, $\sin\theta4$ of the pitch of the fourth halftone are represented by m4 and n4. As shown in FIG. 27(b), the m4 and n4 can be obtained as follows:

$$\texttt{m4=m3-n3}$$

$$\texttt{n4=m3+n3.}$$

Notably, in the above-described example, the fourth halftone is formed by making use of a ratio using a multiple value of "7 times." However, the fourth halftone can be similarly formed through selection of an arbitrary multiple value which enables a value obtained by multiplying √2 by the multiple value to be approximated by an integral value. Thus, in the actual printing, the most suitable fourth halftone may be selected from those prepared by the above-described methods.

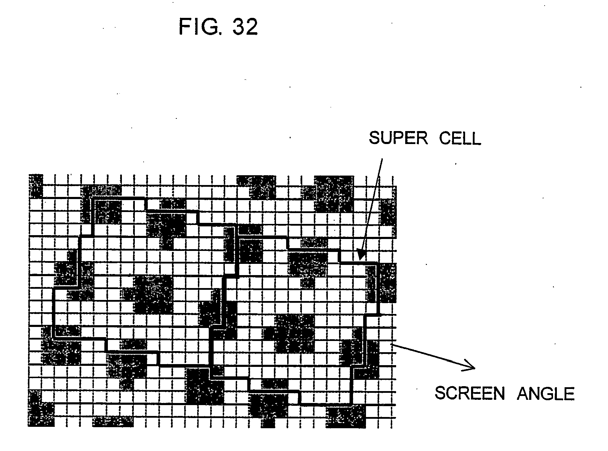

When square super cells are formed so as to facilitate handing by a computer as stated previously with reference to FIG. 31, a misalignment occurs at the joint portion between angled halftone dots. In contrast, in the case shown in FIG. 32 where a large super cell having halftone dots disposed in accordance with the rational tangent method, and such a super cell is arranged with the screen angle being used as a reference (along the screen angle direction and the direction perpendicular thereto) in accordance with the irrational tangent method, to thereby form a matrix, no misalignment occurs at the joint portion. As described above, in the present invention, halftone dots are formed by making use of the ratio of the sides of a right triangle in such manner that the four halftones inevitably overlap, have the same line number, and predetermined screen angular differences therebetween. Since it is guaranteed that the four halftones intersect at a certain point, if the super cell is configured to have a size sufficient to include the intersecting point, no misalignment is found during screening of a large-sized paper irrespective of its size.

In the above, the present invention has been described on the basis of the illustrated examples. However, the present invention is not limited to the above-described examples, and encompasses other configurations which those skilled in the art easily conceive by modifying the embodiments within the scope of the claims.

**Claims**

1. An apparatus for forming multicolor halftone images including halftone plates of a plurality of colors for reproducing a colored image, wherein each halftone plate is tilted with a relative screen angular difference of 30 degrees or 45 degrees in relation to at least one of the remaining halftone plates, the apparatus comprising:

   a specific halftone plate having halftone dots disposed at a predetermined pitch on the basis of a predetermined screen angle; and
   the remaining halftone plates, wherein a right triangle is defined for each of the remaining halftone plates such that its vertical angle is equal to a screen angle difference of 30 degrees or 45 degrees which the halftone plate has in relation to another halftone plate, and its two sides forming the vertical angle corresponds to screen angle directions of the two halftone plates, and on the basis of the right triangle, respective halftone dots of the two halftone plates are disposed at a pitch equal to the predetermined pitch along the screen angle directions of the two halftone plates corresponding to the two sides forming the vertical angle, wherein
the halftone dots are disposed on the basis of the ratio of the three sides of the right triangle represented by numerical values including √3 or √2, which is an irrational number, the numerical values being approximated by integral values which approximate values obtained by multiplying the numerical values by an integer.

2. The apparatus according to claim 1, wherein the two sides forming the vertical angle of the right triangle having the vertical angle of 30 degrees have a ratio approximated by integral values of 7:8, 19:22, or 26:30.

3. The apparatus according to claim 1, wherein the two sides forming the vertical angle of the right triangle having the vertical angle of 45 degrees have a ratio approximated by integral values of 5:7, 7:10, or 12:17.

4. The apparatus according to claim 1, wherein the specific halftone plate is a magenta (M) halftone plate, a black (K) halftone plate maintains a relative screen angular difference of 30 degrees in relation to the magenta (M) halftone plate, a cyan (C) halftone plate maintains a relative screen angular difference of 30 degrees in relation to the black (K) halftone plate, and a yellow (Y) halftone plate maintains a relative screen angular difference of 45 degrees in relation to the black (K) or cyan (C) halftone plate.

5. The apparatus according to claim 4, wherein for the yellow (Y) halftone plate which hardly produces moiré, when the ratio of the right triangle is represented by approximated integral values, a larger rounding error is permitted, and the halftone-dot arrangement pitch of the yellow halftone plate is made higher or lower than those of the remaining halftone plates, whereby the yellow halftone plate overlaps a point where the remaining three halftone plates are overlap.

6. The apparatus according to claim 1, wherein super cells whose line numbers are the same among all the halftone plates and which intersect at at least one point are configured for each halftone plate, and the super cells are joined while the screen angles of the respective halftone plates are used as a reference.

7. A method of forming multicolor halftone images including halftone plates of a plurality of colors for reproducing a colored image, wherein each halftone plate is tilted with a relative screen angular difference of 30 degrees or 45 degrees in relation to at least one of the remaining halftone plates, the method comprising the steps of

disposing halftone dots in s specific halftone plate at a predetermined pitch on the basis of a predetermined screen angle of the specific halftone plate;

defining, for each of the remaining halftone plates, a right triangle such that its vertical angle is equal to a screen angel difference of 30 degrees or 45 degrees which the halftone plate has in relation to another halftone plate, and its two sides forming the vertical angle corresponds to screen angle directions of the two halftone plates;

representing the ratio of the three sides of the right triangle represented by numerical values including $\sqrt{3}$ or $\sqrt{2}$, which is an irrational number, the numerical values being approximated by integral values which approximate values obtained by multiplying the numerical values by an integer; and

disposing, on the basis of the right triangle having a ratio approximated by integral values, respective halftone dots of the two halftone plates at a pitch equal to the predetermined pitch along the screen angle directions of the two halftone plates corresponding to the two sides forming the vertical angle.

8. The method according to claim 7, wherein the two sides forming the vertical angle of the right triangle having a vertical angle of 30 degrees have a ratio approximated by integral values of 7:8, 19:22, or 26: 30.

9. The method according to claim 7, wherein the two sides forming the vertical angle of the right triangle having a vertical angle of 45 degrees have a ratio approximated by integral values of 5:7, 7:10, or 12: 17.

10. The method according to claim 7, wherein the specific halftone plate is a magenta (M) halftone plate, a black (K) halftone plate maintains a relative screen angular difference of 30 degrees in relation to the magenta (M) halftone plate, a cyan (C) halftone plate maintains a relative screen angular difference of 30 degrees in relation to the black (K) halftone plate, and a yellow (Y) halftone plate maintains a relative screen angular difference of 45 degrees in relation to the black (K) or cyan (C) halftone plate.

11. The method according to claim 10, wherein for the yellow (Y) halftone plate which hardly produces moiré, when the ratio of the right triangle is represented by approximated integral values, a larger rounding error is permitted, and the halftone-dot arrangement pitch of the yellow halftone plate is made higher or lower than those of the remaining halftone plates, whereby the yellow halftone plate overlaps a point where the remaining three halftone plates are overlap.

12. The method according to claim 7, wherein super cells whose line numbers are the same among all the halftone plates and which intersect at at least one point are configured for each halftone plate, and the super cells are joined while the screen angles of the respective halftone plates are used as a reference.

# FIG. 1

θ1 ≦ 75 DEGREES

# FIG. 2

θ1 > 75 DEGREES

## FIG. 3

FOURTH HALFTONE

Y

45 DEGREES

90 DEGREES

SECOND HALFTONE

45 DEGREES

FIRST HALFTONE

THIRD HALFTONE

$\theta 2$

O

X

$\theta 2 \leqq 45$ DEGREES

## FIG. 4

SECOND HALFTONE

Y

90 DEGREES

THIRD HALFTONE

FIRST HALFTONE

45 DEGREES

45 DEGREES

FOURTH HALFTONE

$\theta 2$

O

X

$\theta 2 > 45$ DEGREES

# FIG. 5

S1

DETERMINE RELATIVE SCREEN ANGLES OF FIRST TO FOURTH HALFTONES, AND DEFINE HALFTONE DOTS IN FIRST HALFTONE AT PREDETERMINED PITCH

ANGULAR DIFFERENCE = 30°

ANGULAR DIFFERENCE = 45°

S2

DEFINE BY
RIGHT TRIANGLE
HAVING VERTICAL ANGLE OF 30°
(RATIO OF SIDES : $\sqrt{3}$ :1 :2)

S5

DEFINE BY
RIGHT ISOSCELES TRIANGLE
HAVING VERTICAL ANGLE OF 45°
(RATIO OF SIDES : 1 :1 : $\sqrt{2}$)

S3

MULTIPLY THE RATIO OF SIDES BY INTEGER (n), AND SELECT n WHICH ENABLES $n\sqrt{3}$ TO BE APPROXIMATED BY INTEGRAL VALUE

S6

MULTIPLY THE RATIO OF SIDES BY INTEGER (m), AND SELECT m WHICH ENABLES $m\sqrt{2}$ TO BE APPROXIMATED BY INTEGRAL VALUE

S4

DISPOSE HALFTONE DOTS BASED ON RIGHT TRIANGLE HAVING A RATIO APPROXIMATED BY INTEGRAL VALUE BY MULTIPLYING THE RATIO OF SIDES BY n

S7

DISPOSE HALFTONE DOTS BASED ON RIGHT ISOSCELES TRIANGLE HAVING A RATIO APPROXIMATED BY INTEGRAL VALUE BY MULTIPLYING THE RATIO OF SIDES BY m

FIG. 6

Y

FIRST
HALFTONE

A                    1

                              B    SECOND
                                   HALFTONE

√3

90
DEGREES              60
                     DEGREES

30
DEGREES                    2

O                                      X

## FIG. 7

| n | n × √3 |
|---|---|
| 1 | 1.732051 |
| 2 | 3.464102 |
| 3 | 5.196152 |
| 4 | 6.928203 （≒7 ERROR 0.07） |
| 5 | 8.660254 |
| 6 | 10.3923 |
| 7 | 12.12436 |
| 8 | 13.85641 |
| 9 | 15.58846 |
| 10 | 17.32051 |
| 11 | 19.05256 （≒19 ERROR 0.05） |
| 12 | 20.78461 |
| 13 | 22.51666 |
| 14 | 24.24871 |
| 15 | 25.98076 （≒26 ERROR 0.02） |
| 16 | 27.71281 |
| 17 | 29.44486 |
| 18 | 31.17691 |
| 19 | 32.90897 |
| 20 | 34.64102 |

FIG. 8

## FIG. 9

PITCH OF
FIRST HALFTONE

DOT

$\theta 1$

$n1$

$m1$

FIG. 10

## FIG. 11

## FIG.12

## FIG.13

## FIG. 14

## FIG. 15

$\sqrt{8+4\sqrt{3}}$

15 DEGREES

1

$2+\sqrt{3}$

## FIG. 16

1

1

$\sqrt{2}$

## FIG. 17

| m | m×√2 |
|---|---|
| 1 | 1.414214 |
| 2 | 2.828427 |
| 3 | 4.242641 |
| 4 | 5.656854 |
| 5 | 7.071068 (≒7 ERROR 0.071) |
| 6 | 8.485281 |
| 7 | 9.899495 (≒10 ERROR 0.100) |
| 8 | 11.31371 |
| 9 | 12.72792 |
| 10 | 14.14214 |
| 11 | 15.55635 |
| 12 | 16.97056 (≒17 ERROR 0.030) |
| 13 | 18.38478 |
| 14 | 19.79899 |
| 15 | 21.2132 |
| 16 | 22.62742 |
| 17 | 24.04163 |
| 18 | 25.45584 |
| 19 | 26.87006 |
| 20 | 28.28427 |

## FIG. 18

FIG. 19

HALFTONE DOTS
OF 7X8 PIECES

8 PIECES

$7 \times m2$

$7 \times n2$

n2

m2

$7 \times m2$

$7 \times n2$

n4

m4

## FIG. 20

28

OVERLAPPING
POINT OF
FOUR HALFTONES

OVERLAPPING
POINT OF
THREE HALFTONES

(A) : SECOND HALFTONE

(B) : THIRD HALFTONE

(C) : FOURTH HALFTONE

# FIG. 21

SECOND HALFTONE

4

THIRD HALFTONE

7

65 PIECES

4

7 8

FOURTH HALFTONE

OVERLAPPING POINT
OF FOUR HALFTONES
(RELATION OF
FOUR HALFTONES
IS RESET HERE)

FIG. 22(a)

FOURTH HALFTONE (m4, n4)

8

11. 3

SECOND HALFTONE

CORRESPONDING TO
8 PIECES IN FIRST HALFTONE

8

FIG. 22(b)

THIRD HALFTONE

OVERLAPPING POINT OF
FOUR HALFTONES
(FOURTH HALFTONE
INEVITABLY OVERLAPS
A POINT WHERE
THREE HALFTONES
OVERLAP)

4

SECOND
HALFTONE

FOURTH
HALFTON

7

## FIG. 23(a)

CORRESPONDING TO 8 PIECES IN FIRST HALFTONE

SECOND HALFTONE

8

8

FOURTH HALFTONE (m4, n4)

11. 3

## FIG. 23(b)

SECOND HALFTONE

4

7

THIRD HALFTONE

FOURTH HALFTONE

OVERLAPPING POINT OF FOUR HALFTONES (FOURTH HALFTONE INEVITABLY OVERLAPS A POINT WHERE THREE HALFTONES OVERLAP)

## FIG. 24(a)

m4

m2

n4

n2

n2

m2

CORRESPONDING TO 8 PIECES
IN FIRST HALFTONE

## FIG. 24(b)

CORRESPONDING TO
8 PIECES IN
FIRST HALFTONE

m2

n2

n4

m2

n2

m4

## FIG. 25(a)

SECOND
HALFTONE

CORRESPONDING TO
8 PIECES IN FIRST
HALFTONE

8

8

FOURTH
HALFTONE
(m4, n4)

11. 3

FORM 12 HALFTONE DOTS

## FIG. 25(b)

SECOND
HALFTONE

CORRESPONDING TO
8 PIECES IN FIRST
HALFTONE

8

8

FOURTH
HALFTONE
(m4, n4)

11. 3

FORM 11 HALFTONE DOTS

## FIG. 26

## FIG. 27(a)

FOURTH HALFTONE
(m4, n4)

SECOND
HALFTONE

FIRST
HALFTONE

7

4

THIRD HALFTONE
(m3, n3)

8

OVERLAP POINT OF THREE HALFTONES

## FIG. 27(b)

m4

FOURTH
HALFTONE

m3

n4

n3

n3

THIRD
HALFTONE

n3

m3

34

## FIG. 28

## FIG. 29

## FIG. 30

SUPER CELL

## FIG. 31(A)

JOINT PORTION BETWEEN SUPER CELLS

## FIG. 31(B)

JOINT PORTION BETWEEN SUPER CELLS

JOINT PORTION
BETWEEN ⟶
SUPER CELLS

FIG. 32

SUPER CELL

SCREEN ANGLE

| INTERNATIONAL SEARCH REPORT | International application No. |
|---|---|
| | PCT/JP2005/004509 |

A. CLASSIFICATION OF SUBJECT MATTER
  Int.Cl$^7$ G03F5/22, B41C1/00, B41J2/525, H04N1/52, 1/60

According to International Patent Classification (IPC) or to both national classification and IPC

B. FIELDS SEARCHED

Minimum documentation searched (classification system followed by classification symbols)
  Int.Cl$^7$ G03F5/22, B41C1/00, B41J2/525, H04N1/52, 1/60

Documentation searched other than minimum documentation to the extent that such documents are included in the fields searched
  Jitsuyo Shinan Koho          1922-1996   Jitsuyo Shinan Toroku Koho   1996-2005
  Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2005-94284 A  (PFU Ltd.), 07 April, 2005 (07.04.05), Full text; all drawings (Family: none) | 1,2,4-8, 10-12 |
| A | JP 63-132576 A  (Dainippon Screen Mfg. Co., Ltd.), 04 June, 1988 (04.06.88), Full text; all drawings (Family: none) | 1-12 |
| A | JP 2-134635 A  (Dainippon Screen Mfg. Co., Ltd.), 23 May, 1990 (23.05.90), Full text; all drawings & EP 369243 A2          & US 5045931 A & DE 68921420 D | 1-12 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 May, 2005 (23.05.05) | 07 June, 2005 (07.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/004509 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 7-92659 A　(NEC Engineering Kabushiki Kaisha),<br>07 April, 1995 (07.04.95),<br>Full text; all drawings<br>& EP 631430 A2　　　　& US 5572600 A | 1-12 |
| A | JP 2003-110862 A　(Agfa Corp.),<br>11 April, 2003 (11.04.03),<br>Full text; all drawings<br>& EP 525520 A2　　　　& US 5155599 A<br>& EP 748109 A2　　　　& DE 69231866 D<br>& DE 69219527 D　　　　& JP 5-257268 A | 1-12 |
| A | JP 10-75375 A　(Fuji Xerox Co., Ltd.),<br>17 March, 1998 (17.03.98),<br>Full text; all drawings<br>& US 6081349 A | 1-12 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6130656 A
- JP 2002369017 A